Europäisches Patentamt

European Patent Office

Office européen des brevets

(11) Veröffentlichungsnummer: **0 239 842 B1**

(12) **EUROPÄISCHE PATENTSCHRIFT**

(45) Veröffentlichungstag der Patentschrift: **06.03.91**

(51) Int. Cl.⁵: **B60H 1/00**, G05D 23/20

(21) Anmeldenummer: 87103466.6

(22) Anmeldetag: **11.03.87**

(54) Verfahren zum Regeln der Innenraumtemperatur, insbesondere eines Kraftfahrzeugs.

(30) Priorität: 02.04.86 DE 3610962

(43) Veröffentlichungstag der Anmeldung:
**07.10.87 Patentblatt 87/41**

(45) Bekanntmachung des Hinweises auf die
Patenterteilung:
**06.03.91 Patentblatt 91/10**

(84) Benannte Vertragsstaaten:
**ES FR GB SE**

(56) Entgegenhaltungen:
**EP-A- 0 013 298      EP-A- 0 019 416**
**EP-A- 0 051 306      DE-A- 2 812 717**
**DE-A- 2 901 620      DE-A- 2 952 210**
**DE-C- 3 305 641**

(73) Patentinhaber: **Hella KG Hueck & Co.**
**Postfach 28 40**
**W-4780 Lippstadt(DE)**

(72) Erfinder: **Knittel, Otto, Dipl.-Ing.**
**Grabbeweg 3**
**W-4770 Soest(DE)**

## Beschreibung

Verfahren zum Regeln der Innenraumtemperatur, insbesondere eines Kraftfahrzeugs.

Die Erfindung betrifft ein Verfahren zum Regeln der Innenraumtemperatur, insbesondere eines Kraftfahrzeuges, bei dem die bewerteten Ausgangsgrößen eines Innenraumtemperaturfühlers, eines Heiz- und/oder Kühllufttemperaturfühlers und eines Solltemperaturgebers einer elektrischen Regeleinrichtung zugeführt werden, die mindestens ein Stellglied zum Beeinflussen der dem Innenraum zugeführten Wärmemenge steuert.

Aus der EP A2 0 013 298, der DE A1 29 52 210 und der DE C1 33 05 641 sind Einrichtungen bekannt, bei denen ein derartiges Verfahren angewendet wird.

Die DE A1 29 52 210 beschreibt eine Einrichtung zum Regeln der Innenraumtemperatur eines Kraftfahrzeuge, bei der die Temperatur eines Kühlwärmetauschers in Abhängigkeit von der Abweichung zwischen dem eingestellten Sollwert und dem vom Innenraumtemperaturfühler erfaßten Istwert regelbar iSt. Dazu ist ein Verdampfertemperaturfühler vorgesehen, dessen Ausgangssignal wie die Ausgangssignale von Innenraumtemperaturfühler und Sollwertgeber statisch durch einen elektrischen Widerstand bewertet werden.

Die vorbekannte Einrichtung hat den Nachteil, daß aufgrund der statischen Bewertung der Ausgangsgröße des Heiz- und/oder Kühllufttemperaturfühlers sich auch im eingeregelten Zustand eine Abweichung der Innenraumtemperatur von der voreingestellten Solltemperatur ergibt. Dies verschlechtert die Wirkung der Innenraumtemperaturregelung und kann die Behaglichkeit, insbesondere der Insassen von Kraftfahrzeuginnenräumen, beeinträchtigen.

Die EP A2 0 013 298 und die DE C1 33 05 641 beschreiben Einrichtungen zum Regeln der Innenraumtemperatur, bei denen die Ausgangsgröße des Heiz- und/oder Kühllufttemperaturfühlers derart dynamisch bewertet werden, daß nur Änderungen der Heiz- und/oder Kühllufttemperatur die Regelung beeinflussen. Dazu ist im Falle der EP A2 0 013 298 der Wärmetauscherfühler über einen in Serie geschalteten Kondensator mit der Regeleinrichtung verbunden. In der DE C1 33 05 641 ist ein Operationsverstärker vorgesehen, dessen einer Eingang direkt und dessen anderer Eingang verzögert mit der Ausgangsgröße des Heiz- und/oder Kühllufttemperaturfühlers beaufschlagt wird.

Diese vorbekannten Einrichtungen weisen den Nachteil auf, daß eine Anpassung der Bewertung an den Betrieb der Innenraumtemperaturregelung nicht vorgesehen ist. Dies kann insbesondere bei einem Wechsel der Innenraumtemperatur, z. B. durch öffnen der Fahrzeugtüren, oder des voreingestellten Sollwerts auch ohne Änderung des Wärmemengenangebots des Wärmetauschers dazu führen, daß aufgrund der dann auftretenden Differenz zwischen Innenraumtemperatur und Solltemperatur sehr warme oder sehr kalte Luft in den Innenraum eingeblasen wird. Dies kann zu einem Wärme- oder Kälteschwall führen, dem die Kraftfahrzeuginsassen ausgesetzt werden. Dies kann insbesondere die Behaglichkeit der Kraftfahrzeuginsassen beeinträchtigen.

Die Erfindung hat die Aufgabe, ein Verfahren der eingangs genannten Art dahingehend zu verbessern, daß unter allen Betriebsbedingungen des Kraftfahrzeugs die Innenraumtemperatur wirkungsvoll und für die Kraftfahrzeuginsassen behaglich auf die eingestellte Solltemperatur geregelt wird.

Diese Aufgabe wird dadurch gelöst, daß die Bewertung der Heiz- und/oder Kühllufttemperatur durch die Regeleinrichtung erfolgt und von der Abweichung der Innenraumtemperatur von der Solltemperatur abhängig ist.

Durch die Bewertung der Heiz- und/oder Kühllufttemperatur, abhängig von der Abweichung der Innenraumtemperatur von der Solltemperatur, ist sichergestellt, daß die Wirkung der Heiz- und/oder Kühllufttemperatur auf die Regeleinrichtung abhängig von dieser Abweichung veränderbar ist.

Der als zusätzlicher Temperaturfühler eingesetzte Heiz- und/oder Kühllufttemperaturfühler ist zur Durchführung bereits bekannter Regelverfahren häufig schon vorhanden, so daß das erfindungsgemäße Verfahren ohne Veränderung der verwendeten Fühler und des verwendeten Stellglieds nur durch Veränderungen an der Regeleinrichtung durchgeführt werden kann. Das heißt, das erfindungsgemäße Verfahren ist gegenüber dem Vorbekannten einfach und kostengünstig durchführbar, und auch die nachträgliche Durchführung des erfindungsgemäßen Verfahrens mit bereits vorhandenen Vorrichtungen ist leicht möglich. Das erfindungsgemäße Verfahren ist auch deshalb einfach und kostengünstig durchführbar, weil einfach gebaute Temperaturfühler besonders im Innenraum des Kraftfahrzeugs verwendet werden können. Es ist im Gegensatz zu den vorbekannten Verfahren nicht notwendig, z. B. den Innenraumtemperaturfühler an einem sogenannten Strömungsmeßpunkt im Kraftfahrzeug anzuordnen. Als Strömungsmeßpunkt bezeichnet man Meßpunkte, an denen der Fühler ständig von der zu messenden Luft umströmt wird. Diese Strömungsmeßpunkte sind auch in zeit- und kostenaufwendigen Versuchsreihen nur schuer zu finden. Bei Anwendung des erfindungsgemäßen Verfahrens genügt es z. B., den Innenraumtemperaturfühler an einem beliebigen indirekten, d. h. nicht direkt angeströmten Meßpunkt im Innenraum des Kraftfahrzeugs anzuordnen, so daß die Montage der Vorrichtung zur Durchführung des erfindungsgemäßen Verfahrens gegenüber dem Vorbekannten vereinfacht wird. Das heißt z. B. beim Kaltstart des Kraftfahrzeugs im Winter wird das zu lange Einblasen von Warmluft in den Kraftfahrzeuginnenraum zur Erwärmung unterdrückt. Bei Sollwertsprüngen in Richtung kalt wird das zu lange Einblasen von Kaltluft in den Innenraum des Kraftfahrzeugs unterdrückt. Die Anwendung des erfindungsgemäßen Verfahrens hat die gleiche Wirkung wie ein einziger Innenraumtemperaturfühler, der entsprechend der Abweichung der Innenraumtemperatur von der Solltemperatur in seiner Höhe innerhalb des Innenraums des Kraftfahrzeugs veränderlich ist. Dabei kann der jeweilige Meßort dieses einzigen virtuellen Innenraumtemperaturfühlers durch Veränderung der Abhängigkeit von der Abweichung zwischen Solltemperatur und Innenraumtemperatur in weiten Grenzen z. B. an die konstruktiven Voraussetzungen des Kraftfahrzeuginnenraums oder an die gewünschte Wirkung der Innenraumtemperaturregelung angepaßt werden. Das erfindungsgemäße Verfahren ist grundsätzlich bei allen Kraftfahrzeugheizungen oder -klimaanlagen anwendbar.

Insbesondere kann das erfindungsgemäße Verfahren bei wasserseitig und luftseitig geregelten Kraftfahrzeugheizungen angewendet werden. Bei wasserseitig geregelten Heizungen wird der Strom des die Wärmemenge tragenden, erwärmten Kühlwassers des Kraftfahrzeugverbrennungsmotors durch einen Wärmetauscher durch ein kontinuierlich oder getaktet betätigtes Wasserventil als Stellglied gesteuert. Bei luftseitig geregelten Kraftfahrzeugheizungen wird durch eine Luftmischklappe als Stellglied das Mischungsverhältnis von durch einen kontinuierlich durchflossenen Kühlwasserwärmetauscher erwärmter Luft als Wärmeträger und von außerhalb des Kraftfahrzeugs zugeführter Kaltluft gesteuert. Bei beiden Heizungen zeigt der Heiz- und/oder Kühllufttemperaturfühler unterschiedliche Meßwerte, die vom Meßort, insbesondere aber auch von den unterschiedlichen Ansprechgeschwindigkeiten auf Heiz- und/oder Kühllufttemperaturänderungen, und der unterschiedlichen Welligkeit der Heiz- und/oder Kühllufttemperatur bei den verschiedenen Heizungen herrühren. Mit dem erfindungsgemäßen Verfahren ist die Anpassung der Wirkung des Heiz- und/oder Kühllufttemperaturfühlers auf die elektrische Regeleinrichtung durch die Abhängigkeit der Bewertung des Heiz- und/oder Kühllufttemperaturfühlers von der Abweichung der Innenraumtemperatur von der Solltemperatur gegenüber dem Vorbekannten leicht möglich.

Schließlich ist das erfindungsgemäße Verfahren einfach durch die Einbeziehung weiterer Temperaturfühler erweiterbar.

Es ist besonders vorteilhaft, die Bewertung der Heiz- und/oder Kühllufttemperatur im wesentlichen proportional der Abweichung der Innenraumtemperatur von der Solltemperatur zu wählen, weil dann nicht nur bei großen Abweichungen der Innenraumtemperatur von der Solltemperatur der Heiz- und/oder Kühllufttemperaturfühler wirksam ist, sondern auch mit schwächer werdender Bewertung bei geringeren Abweichungen wirksam bleibt. Das heißt, nicht nur beim Kaltstart des Kraftfahrzeugs wird so eine "Aufheizung" des Kraftfahrzeugs mit Kaltluft vermieden, sondern auch bei weniger extremen Betriebszuständen stellt die Regeleinrichtung das Stellglied abhängig von der Heiz- und/oder Kühllufttemperatur und damit abhängig von dem Wärmeangebot der Heizeinrichtung.

Es ist ebenfalls besonders vorteilhaft, die Bewertung der Heiz- und/oder Kühllufttemperatur in wesentlichen verschwinden zu lassen, wenn die Innenraumtemperatur gleich der voreingestellten Solltemperatur ist, weil in diesem eingeregelten Zustand der Regeleinrichtung die Einflußnahme der Heiz- und/oder Kühllufttemperatur auf die Regelung häufig unerwünscht ist und die Innenraumtemperatur auf den voreingestellten Sollwert geregelt werden soll. Dadurch wird ein Überschwingen der Innenraumtemperatur über die voreingestellte Solltemperatur hinaus beim Aufheizen des Kraftfahrzeugs besonders wirkungsvoll vermieden. Eine bleibende Abweichung der Innenraumtemperatur von der voreingestellten Solltemperatur kann sich so nicht einstellen. Die Innenraumtemperatur kann nicht bei längerer Fahrzeit von der voreingestellten Solltemperatur wieder wegdriften.

Die Bewertung des Heiz- und/oder Kühllufttemperaturfühlers weist vorteilhaft auch einen Maximalwert auf, wenn die Abweichung der Innenraumtemperatur von der Solltemperatur einen vorgegebenen Wert erreicht. Damit ist auch bei Abweichungen größer als der vorgegebene Wert eine Heizungsregelung abhängig von der Innenraumtemperatur sichergestellt, und eine Regelung allein abhängig von der Heiz- und/oder Kühllufttemperatur wird vermieden.

Man kann auch vorteilhaft die Bewertung der Heiz- und/oder Kühllufttemperatur von der Differenz zwischen der Solltemperatur und der Innenraumtemperatur abhängig machen, um die Bewertung der Heiz- und/oder Kühllufttemperatur gegenüber der Innenraumtemperatur im wesentlichen linear mit der gemessenen Differenz kleiner werden zu lassen. Dies würde einer Verschiebung eines einzigen virtuellen Innenraumtemperaturfühlers im wesentlichen linear mit der Temperaturdifferenz entsprechen.

Ebenso sind z. B. durch die Bewertungen der Heiz- und/oder Kühllufttemperatur abhängig vom Quotienten aus Solltemperatur und Innenraumtemperatur nicht lineare Abhängigkeiten von der Abweichung einfach durchführbar. Es ist auch vorteilhaft, die Differenz zwischen Solltemperatur und Innenraumtemperatur mit einem Verstärkungsfaktor zu wichten, um bei einer vorgegebenen Temperaturdifferenz die Grundbewertung der Heiz- und/oder Kühllufttemperatur und der Innenraumtemperatur im Verhältnis beeinflussen zu können und damit die grundsätzliche Wirkung der Heiz- und/oder Kühllufttemperatur auf die elektrische Regeleinrichtung festlegen zu können und an vorgegebene Kraftfahrzeuge anpassen zu können.

Man kann auch die Bewertungen von dem Betrag der Differenz oder des Quotienten abhängig wählen, um z. B. eine gleiche Bewertung der positiven und der negativen Abweichungen der Innenraumtemperatur vom Sollwert zu erreichen.

Dabei kann man vorteilhaft den Verstärkungsfaktor konstant wählen, um auch bei anderen Temperaturdifferenzen eine einfache und für die elektrische Regeleinrichtung leicht auswertbare Aussage über die Bewertung des Heiz- und/oder Kühllufttemperaturfühlers machen zu können.

Es ist jedoch auch möglich, den Verstärkungsfaktor abhängig von der Differenz zwischen Solltemperatur und Innenraumtemperatur zu wählen, um eine nicht lineare Bewertung des Heiz- und/oder Kühllufttemperaturfühlers abhängig von dieser Temperaturdifferenz zu erreichen. Der Verstärkungsfaktor kann auch abhängig von einer oder mehreren weiteren Temperaturen gewählt werden.

Als weitere Temperatur kann man die Außentemperatur wählen, um das erfindungsgemäße Verfahren abhängig auch von Schwankungen der Außentemperatur durchzuführen. Damit ist z. B. eine Anpassung der Solltemperatur über die Voreinstellung des Bedieners hinaus an das menschliche Temperaturempfinden möglich, das auch von der Außentemperatur abhängt. Die Berücksichtigung der Außentemperatur kann auch an anderer Stelle im erfindungsgemäßen Verfahren erfolgen, z. B. indem man die Regelverstärkung der Regeleinrichtung von der Außentemperatur abhängig wählt. Dadurch ist es möglich, die außentemperaturabhängige Trägheit der Regelstrecke z. B. des Kraftfahrzeuginnenraums zu kompensieren.

Insbesondere bei wasserseitig geregelten Heizungsvorrichtungen ist es vorteilhaft, der Regeleinrichtung zusätzlich dynamische Änderungen der Ausgangsgröße, des Heiz- und/oder Kühllufttemperaturfühlers zuzuführen, um schnelle Änderungen des Wärmemengenangebots im Heizungswärmetauscher möglichst vor ihrem Einfluß auf die Innenraumtemperatur im Verfahren zu berücksichtigen.

Man kann vorteilhaft als elektrische Regeleinrichtung einen Mikrorechner verwenden, weil z. B. fahrzeugabhängige Änderungen oder Erweiterungen des Verfahrensablaufs durch einfache Änderungen des Mikrorechnerprogramms ohne Änderungen schaltungstechnischer Art möglich sind.

Es ist weiterhin vorteilhaft, den Innenraumtemperaturfühler in einer möglichst unbewegten Luftmasse des Kraftfahrzeugs anzuordnen, weil derartige Meßorte im Kraftfahrzeug ohne zeit- und kostenaufwendige Versuchsreihen in großer Zahl zu finden sind, und weil die Funktion des erfindungsgemäßen Verfahrens im wesentlichen unabhängig von Luftströmungen im Kraftfahrzeug ist. Besonders vorteilhaft ist die Anordnung des Innenraumtemperaturfühlers im Armaturenbrett des Kraftfahrzeugs, weil dort meist genügend Einbauraum für den Innenraumtemperaturfühler vorhanden ist, und weil der Innenraumtemperaturfühler dort in der für den Fühler günstigen Höhe angeordnet ist. Häufig wird auch die elektrische Regeleinrichtung im Armaturenbrettbereich des Kraftfahrzeugs angeordnet, so daß der Montageaufwand für die zur Durchführung des erfindungsgemäßen Verfahrens erforderliche Vorrichtung im Kraftfahrzeug durch die Verringerung des elektrischen Installationsaufwandes reduziert ist.

Bei wasserseitig geregelten Heizungsanlagen kann man vorteilhaft den Heiz- und/oder Kühllufttemperaturfühler hinter dem Heiz- und/oder Kühlluftwärmetauscher anordnen. Bei luftseitig geregelten Heizungsanlagen kann man vorteilhaft den Heiz- und/oder Kühllufttemperaturfühler als Mischkammer oder Ausblastemperaturfühler ausbilden. So ist in beiden Fällen eine genaue und verzögerungsarme Messung der Temperatur der Heiz- und/oder Kühlluft möglich.

In den Figuren ist ein Ausführungsbeispiel des erfindungsgemäßen Verfahrens dargestellt, das im folgenden näher erläutert wird.

Es zeigen

Figur 1 schematisch eine Vorrichtung zur Durchführung des erfindungsgemäßen Verfahrens in einem Kraftfahrzeug und

Figur 2 ein Diagramm der bewerteten Heiz- und/oder Kühllufttemperatur und der Innenraumtemperatur.

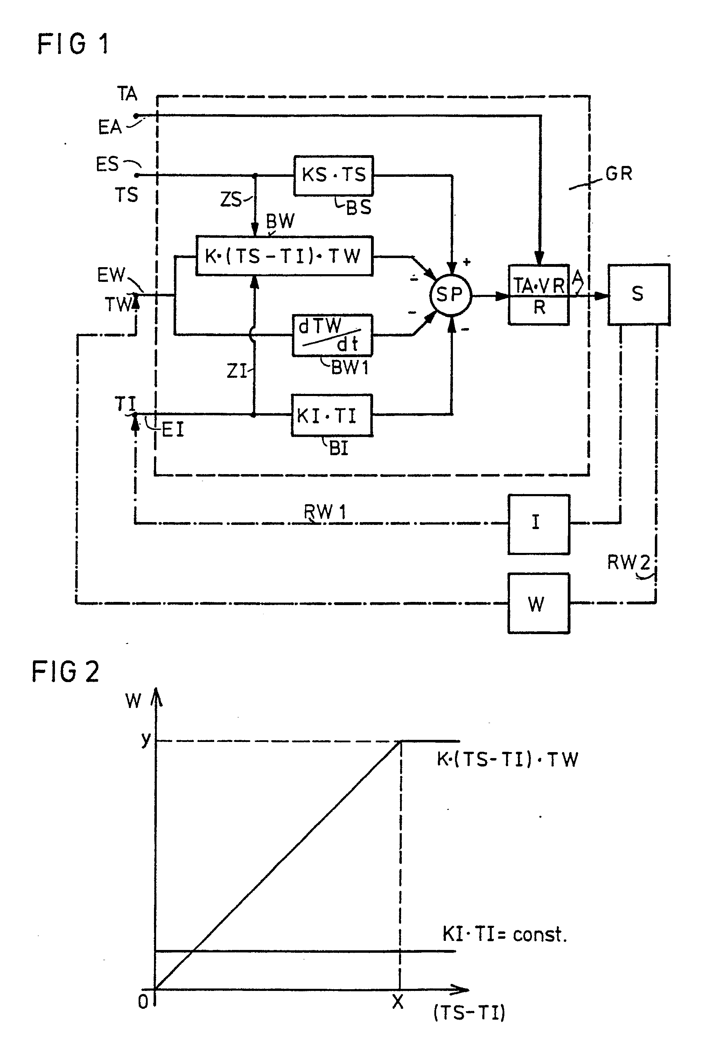

In der Figur 1 wird die durch den Bediener des Kraftfahrzeugs voreingestellte Solltemperatur (TS) als Ausgangsgröße des Solltemperaturgebers über eine Eingangsleitung für die Solltemperatur (ES) der Gesamtregeleinrichtung (GR) zugeführt. Zugleich wird die Heiz- und/oder Kühllufttemperatur (TW) als Ausgangsgröse des Heiz- und/oder Kühllufttemperaturfühlers über eine Eingangsleitung für die Heiz- und/oder Kühllufttemperatur (EW) und die Innenraumtemperatur (TI) als Ausgangsgröße eines Innenraumtemperaturfühlers über eine Eingangsleitung für die Innenraumtemperatur (EI) der Gesamtregeleinrichtung (GR) zugeführt. Über eine Ausgangsleitung (A) der Gesamtregeleinrichtung (GR) wird das Stellglied (S) im Kraftfahrzeug gesteuert. Durch die strichpunktierte Linie (RW1) sei die Rückwirkung der Steuerung des Stellgliedes (S) durch die Gesamtregeleinrichtung (GR) über den Innenraum des Kraftfahrzeugs (I) gemeinsam mit den mechanischen Komponenten der Heizeinrichtung auf die Innenraumtemperatur (TI) und durch die strichpunktierte Linie (RW2) sei die Rückwirkung der Steuerung des Stellglieds (S) durch die Gesamtregeleinrichtung (GR) über den Wärmetauscher (W) des Kraftfahrzeugs auf die Wärmetauschertemperatur (TW) angedeutet. Durch diese Rückwirkung (R) auf die Innenraumtemperatur (TI) und damit auf eine Eingangsleitung (EI) für die Innenraumtemperatur ist angedeutet, daß es sich bei der Heizungsregelung des Kraftfahrzeugs um einen zumindest teilweise geschlossenen Regelkreis handelt.

Die elektrische Gesamtregeleinrichtung (GR) kann entweder diskret mit elektronischen Bauteilen aufgebaut werden oder als Teil eines Mikrorechners ausgebildet werden. Im vorliegenden Fall sei die elektrische Gesamtregeleinrichtung (GR) aus diskreten Bausteinen aufgebaut. Bei Ausbildung der elektrischen Gesamtregeleinrichtung als Teil eines Mikrorechners wäre die Funktion der Vorrichtungsteile als Gesamtverfahren beschreibbar.

Die elektrische Gesamtregeleinrichtung (GR) weist eine Bewertungsstufe (BS) zur Bewertung der Solltemperatur (TS) auf. Ebenso ist zur Bewertung der Innenraumtemperatur (TI) eine Bewertungsstufe (BI) als Teil der elektrischen Gesamtregeleinrichtungen (GR) vorgesehen. Die Heiz- und/oder Kühllufttemperatur (TW) wird ebenfalls Bewertungsstufen (BW)und (BW1) als Teil der Gesamtregeleinrichtungen zugeführt, wobei der Bewertungsstufe (BW) über eine Zweigleitung (ZI) für die Innenraumtemperatur und über eine Zweigleitung (ZS) für die Solltemperatur auch die Ausgangsgrößen des Solltemperaturgebers und des Innenraumtemperaturfühlers zugeführt werden. Die Ausgangsgrößen der Bewertungsstufen (BS, BW, BW1 und BI) sind auf einen Summierer (SP) geschaltet, der ebenfalls als Teil der elektrischen Gesamtregeleinrichtung (GR) ausgebildet ist. Dabei geht die Ausgangsgröße der Bewertungsstufe (BS) für die Solltemperatur mit positiven Vorzeichen und die Ausgangsgrößen der Bewertungsstufen für die Heiz- und/oder Kühllufttemperatur und die Innenraumtemperatur mit negativen Vorzeichen in die Summierung ein.

Die Ausgangsgröße des Summierers (SP) wird dem übrigen Teil der Regeleinrichtung (R) zugeführt, der z. B. abhängig von der Ausgangsgröße des Summierers (SP) die elektrischen Ausgangssignale zum Ansteuern des Stellglieds (S) über die Ausgangsleitung (A) erzeugt. Die Art der erzeugten Ausgangssignale ist dabei abhängig von der Art des verwendeten Stellglieds. Bei luftseitig gesteuerten Heizungen z. B. kann die Regeleinrichtung (R) ein elektrisches Ausgangssignal erzeugen, das zur Positionierung einer Luftmischklappe geeignet ist. Derartige Regeleinrichtungen (R) zum Ansteuern verschiedenartiger Stellglieder (S) sowohl bei wasserseitig als auch bei luftseitig geregelten Heizungseinrichtungen sind vorbekannt.

Zusätzlich ist über eine Eingangsleiter (EA) für die Außentemperatur (TA) der Regeleinrichtung (R) die Außentemperatur (TA) zur Beeinflussung der Gesamtverstärkung (VR) der Regeleinrichtung unabhängig von der Gewichtung der übrigen Eingangsgrößen zuführbar. Die Gesamtverstärkung (VR) wird vorteilhaft mit dem Wert der Außentemperatur (TA) multipliziert.

Im folgenden wird das erfindungsgemäße Verfahren, das bei der Vorrichtung des Ausführungsbeispiels nach der Figur 1 angewendet wird, teilweise unter Bezugnahme auf das Diagramm in Figur 2 erläutert.

Die durch den Bediener des Kraftfahrzeugs voreingestellte Solltemperatur (TS) wird in der Bewertungsstufe (BS) für die Solltemperatur mit einem Verstärkungsfaktor (KS) für die Solltemperatur (TS) multipliziert. Die vom Innenraumtemperaturfühler gemessene Innenraumtemperatur (TI) wird in der Bewertungsstufe (BI) für die Innenraumtemperatur mit einem Verstärkungsfaktor (KI) für die Innenraumtemperatur (TI) mulipliziert. Durch die Bewertung der Solltemperatur (TS) in der Bewertungsstufe (BS) ist es möglich, z. B. die Wirkung der voreingestellten Solltemperatur auf den Summierer (SP) zu beeinflussen. Damit ist z. B. die Anpassung der elektrischen Gesamtregeleinrichtung (GR) an die elektrischen Eigenschaften vorgegebener Solltemperaturgeber möglich, ohne daß Änderungen an dem möglicherweise vorhandenen Solltemperaturgeber notwendig sind. Durch die Bewertung der Innenraumtemperatur (TI) in der Bewertungsstufe (BI) ist es möglich, die Wirkung der Innenraumtemperatur (TI) auf die elektrische Gesamtregeleinrichtung (GR) relativ zu den übrigen Einflußgrößen Solltemperatur (TS) und Heiz- und/oder Kühllufttemperatur (TW) zu verändern. Zugleich wird die Heiz- und/oder Kühllufttemperatur (TW) in der Bewertungsstufe (BW) für die Heiz- und/oder Kühllufttemperatur (TW) mit der Differenz aus der Solltemperatur (TS) minus der Innenraumtemperatur (YI) multipliziert und mit einem Verstärkungsfaktor (K) bewertet. Das heißt, die Wirkung der Heiz- und/oder Kühllufttemperatur (TW) auf den Summierer (SP) und damit auf die elektrische Gesamtregeleinrichtung (GR) wird im wesentlichen durch die Differenz von voreingestellter Solltemperatur (TS) und der aktuellen gemessenen Innenraumtemperatur (TI) bestimmt.

Diese Wirkung ist im Diagramm der Figur 2 verdeutlicht. Die bereits vorbekannte Wirkung einer eventuell vorhandenen Bewertungsstufe (BW1) zur Erfassung der zeitlichen Änderungen (dTW/dt) der Wärmetauschertemperatur bleibt hier unberücksichtigt. Dort ist die Wirkung (W) der Innenraumtemperatur (TI) multipliziert mit dem Verstärkungsfaktor (KI) und der Heiz- und/oder Kühllufttemperatur (TW) multipliziert mit der Differenz von Solltemperatur (TS) minus Innenraumtemperatur (TI) und dem Verstärkungsfaktor (K) gegen die Differenz von Solltemperatur (TS) und Innenraumtemperatur (TI) aufgetragen. Aus dem Diagramm der Figur 2 ist erkennbar, daß bei Gleichheit von voreingestellter Solltemperatur (TS) und gemessener Innenraumtemperatur (TI) die Wirkung der Heiz- und/oder Kühllufttemperatur (TW) im wesentlichen gleich Null ist und also die Bewertung der Heiz- und/oder Kühllufttemperatur (TW) in diesem Fall verschwindet. Dagegen nimmt die Wirkung (W) der Heiz- und/oder Kühllufttemperatur (TW) mit gröser werdender Differenz von Solltemperatur (TS) minus Innenraumtemperatur (TI) proportional zu, wogegen die Wirkung (W) der Innenraumtemperatur (TI) unabhängig von dieser Differenz konstant bleibt, Dies hat zur Folge, daß bei Gleichheit von voreingestellter Solltemperatur (TS) und gemessener Innenraumtemperatur (TI) die elektrische Gesamtregeleinrichtung (GR) nur abhängig von der voreingestellten Solltemperatur (TS) und der gemessenen Innenraumtemperatur (TI) regelt. Damit ist sichergestellt, daß tatsächlich auf die voreingestellte Solltemperatur (TS) als Zielwert geregelt wird. So wird eine bleibende Abweichung zwischen der Solltemperatur (TS) und der Innenraumtemperatur (TI) vermieden. Eine Drift der Innenraumtemperatur (TI) weg von der voreingestellten Solltemperatur (TS) im eingeregelten Zustand ist nicht möglich. Andererseits ist bei Vorhandensein einer Differenz zwischen der Solltemperatur (TS) und der gemessenen Innenraumtemperatur (TI) die Heiz- und/oder Kühllufttemperatur (TW) wirksam. Dadurch wird sichergestellt, daß im Falle des nicht eingeregelten Zustands der elektrischen Gesamtregeleinrichtung (GR) die Heiz- und/oder Kühllufttemperatur (TW) als Maß für das Wärmemengenangebot des mechanischen Teils der Heizeinrichtung in die Regelung eingeht. Das heißt, soll z. B. beim Kaltstart des Kraftfahrzeugs im Winter der Innenraum von einer niedrigen Temperatur auf eine höhere Temperatur aufgeheizt werden, so ist die Differenz zwischen der Solltemperatur (TS) minus der Innenraumtemperatur (TI) groß. Eine Regeleinrichtung, die die Heiz- und/oder Kühllufttemperatur (TW) unberücksichtigt läßt, würde dann durch die Regeleinrichtung das Stellglied (S) derart steuern, daß eine große Menge Luft in den Innenraum (I) des Kraftfahrzeugs eingeblasen würde. Bei Annäherung der Innenraumtemperatur (TI) an die Solltemperatur (TS) würde das Stellglied derart betätigt, daß nur eine geringe Wärmemenge zugeführt wird, und die Innenraumtemperatur (TI) würde sich nur sehr langsam und für die Insassen auf Dauer unangenehm der Solltemperatur nähern.

Durch die Berücksichtigung der Heiz- und/oder Kühllufttemperatur (TW) abhängig von der Differenz zwischen der voreingestellten Solltemperatur (TS) minus der herrschenden Innenraumtemperatur (TI) wird dieser Fehler bekannter Regelverfahren vermieden, denn das Stellglied (S) zum Beeinflussen der dem Innenraum (I) zugeführten Wärmemenge wird nun auch abhängig von der Heiz- und/oder Kühllufttemperatur (TW) gesteuert. Das heißt im Falle des Kaltstarts des Kraftfahrzeugs im Winter, daß bei Annäherung der Innenraumtemperatur (TI) an die Solltemperatur (TS) zwar das Stellglied (S) der Heizeinrichtung geschlossen wird, aber um einen wesentlich geringeren Betrag als bei den vorbekannten Regelverfahren. Erst wenn nach einer bestimmten Fahrzeit die Innenraumtemperatur (TI) sich der Solltemperatur angenähert hat, wird das Stellglied (S) durch die elektrische Gesamtregeleinrichtung derart gesteuert, daß dem Innenraum weniger erwärmte Luft und damit eine geringere Wärmemenge zum Aufheizen des Innenraums (I) zugeführt wird. Durch das erfindungsgemäße Verfahren wird die voreingestellte Solltemperatur (TS) also schneller erreicht als beim Vorbekannten Eine bleibende Regelabweichung tritt hier nicht auf. Die gleichen Vorteile ergeben sich beim Sollwertsprung.

Das Stellglied (S) wird durch die elektrische Gesamtregeleinrichtung (GR) also derart gesteuert, daß dem Innenraum (I) die größtmögliche, durch die mechanischen Teile der Heizeinrichtung lieferbare Wärmemenge zugeführt wird, wenn das Angebot an Wärmemenge groß ist, so daß die Heiz- und Kühllufttemperatur (TW) entsprechend groß ist, und wenn die Differenz zwischen der voreingestellten Solltemperatur (TS) minus der gemessenen Innenraumtemperatur (TI) einen großen Wert aufweist.

Das Verhältnis der Wirkung (W) der Innenraumtemperatur (TI) und der Heiz- und/oder Kühllufttemperatur (TW) auf den Summierer (SP) und damit auf die elektrische Gesamtregeleinrichtung (GR) ist vor allem durch die Veränderung der Verstärkungsfaktoren (K) für die Heiz- und/oder Kühllufttemperatur (TW) und (KI) für die Innenraumtemperatur (TI) beeinflußbar. Dadurch ist das erfindungsgemäße Regelungsverfahren besonders gut an vorhandene Heizeinrichtungen mit ihrem mechanischen Teil und der vorgegebenen Fühler-und Geberbestückung anpaßbar.

In dem Diagramm der Figur 2 ist noch angedeutet, daß die Wirkung (W) der Heiz- und/oder Kühllufttemperatur (TW) auf die elektrische Gesamtregeleinrichtung einen Maximalwert (Y) aufweist, der bei einer vorgegebenen Differenz (X) zwischen der voreingestellten Solltemperatur (TS) und der Innenraumtemperatur (TI) erreicht wird. Damit wird vermieden, daß bei sehr großen Abweichungen der Innenraumtemperatur (TI) von der Solltemperatur (TS) die elektrische Gesamtregeleinrichtung (GR) nur abhängig von der Heiz- und/oder Kühllufttemperatur die Innenraumtemperatur (TI) regelt.

Es ist ebenfalls möglich, die Wirkung (W) der Heiz- und/oder Kühllufttemperatur (TW) vom Betrag der Differenz zwischen der Solltemperatur (TS) minus der Innenraumtemperatur (TI) abhängig zu machen. Dies ist besonders vorteilhaft bei Kraftfahrzeug-Klimaanlagen, bei denen der Fall eintreten kann, daß zum Erreichen der voreingestellten Solltemperatur (TS) der Innenraum des Kraftfahrzeugs durch Zuführen von kühler Luft heruntergekühlt werden muß.

Durch die Anwendung des erfindungsgemäßen Verfahrens wird unter allen Betriebsbedingungen des Kraftfahrzeugs die Innenraumtemperatur wirkungsvoll und für die Kraftfahrzeuginsassen behaglich auf die eingestellte Solltemperatur (TS) geregelt.

## Ansprüche

1. Verfahren zum Regeln der Innenraumtemperatur, insbesondere eines Kraftfahrzeugs, bei dem die bewerteten Ausgangsgrößen eines Innenraumtemperaturfühlers, eines Heiz- und/oder Kühllufttemperaturfühlers und eines Solltemperaturgebers einer elektrischen Regeleinrichtung zugeführt werden, die mindestens ein Stellglied zum Beeinflussen der dem Innenraum zugeführten Wärmemenge steuert, dadurch gekennzeichnet, daß die Bewertung der Heiz- und/oder Kühllufttemperatur (TW) durch die Regeleinrichtung erfolgt und von der Abweichung der Innenraumtemperatur (TI) von der Solltemperatur (TS) abhängig ist.

2. Verfahren nach Anspruch 1, dadurch gekennzeichnet, daß die Bewertung der Heiz- und/oder Kühllufttemperatur (TW) im wesentlichen proportional der Abweichung der Innenraumtemperatur (TI) von der Solltemperatur (TS) ist.

3. Verfahren nach Anspruch 1, dadurch gekennzeichnet, daß die Bewertung der Heiz- und/oder Kühllufttemperatur (TW) im wesentlichen verschwindet, wenn die Innenraumtemperatur (TI) gleich der Solltemperatur (TS) ist.

4. Verfahren nach Anspruch 1, dadurch gekennzeichnet, daß die Bewertung der Heiz- und/oder Kühllufttemperatur (TW) einen Maximalwert (Y) aufweist, wenn die Abweichung der Innenraumtemperatur (TI) von der Solltemperatur (TS) einen vorgegebenen Wert (X) erreicht.

5. Verfahren nach Anspruch 1, dadurch gekennzeichnet, daß die Bewertung der Heiz- und/oder Kühllufttemperatur (TW) von der Differenz zwischen Solltemperatur (TS) und Innenraumtemperatur (TI) abhängig ist.

6. Verfahren nach Anspruch 5, dadurch gekennzeichnet, daß die Bewertung von dem Betrag der Differenz abhängig ist.

7. Verfahren nach Anspruch 5, dadurch gekennzeichnet, daß die Differenz zwischen der Solltemperatur (TS) und der Innenraumtemperatur (TI) mit einem Verstärkungsfaktor (K) gewichtet wird.

8. Verfahren nach Anspruch 7, dadurch gekennzeichnet, daß der Verstärkungsfaktor (K) konstant gewählt wird.

9. Verfahren nach Anspruch 7, dadurch gekennzeichnet, daß der Verstärkungsfaktor (K) abhängig von der Differenz zwischen Solltemperatur (TS) und Innenraumtemperatur (TI) und/oder einer weiteren Temperatur gewählt wird.

10. Verfahren nach Anspruch 7, dadurch gekennzeichnet, daß der Verstärkungsfaktor (K) abhängig von der Außentemperatur gewählt wird.

11. Verfahren nach Anspruch 1, dadurch gekennzeichnet, daß die Bewertung der Heiz- und/oder Kühllufttemperatur (TW) vom Quotienten aus Solltemperatur (TS) und Innenraumtemperatur (TI) und/oder vom Quotienten aus Innenraumtemperatur (TI) und Solltemperatur (TS), insbesondere verringert um den Wert 1, abhängig ist.

12. Verfahren nach Anspruch 11, dadurch gekennzeichnet, daß die Bewertung vom Betrag der Quotienten abhängig ist.

13. Verfahren nach Anspruch 1, dadurch gekennzeichnet, daß zusätzlich dynamische Änderungen der Ausgangsgröße des Heiz- und/oder Kühllufttemperaturfühlers der Regeleinrichtung zugeführt werden.

14. Verfahren nach Anspruch 1, dadurch gekennzeichnet, daß die Gesamtverstärkung (VR) der Regeleinrichtung (R) von der Außentemperatur (TA) abhängig ist.

15. Verfahren nach Anspruch 1, dadurch gekennzeichnet, daß als elektrische Gesamtregeleinrichtung (GR) ein Mikrorechner verwendet wird.

16. Verfahren nach Anspruch 1, dadurch gekennzeichnet, daß der Innenraumtemperaturfühler im Kraftfahrzeug im wesentlichen in einer unbewegten Luftmasse, insbesondere im Armaturenbrett angeordnet wird.

17. Verfahren nach Anspruch 1, dadurch gekennzeichnet, daß der Heiz- und/oder Kühllufttemperaturfühler hinter einem Heiz- und/oder Kühlluftwärmetauscher angeordnet wird.

18. Verfahren nach Anspruch 1, dadurch gekennzeichnet, daß der Heiz- und/oder Kühllufttemperaturfühler als Mischkammertemperaturfühler oder als Ausblastemperaturfühler ausgebildet wird.

## Claims

1. Method for regulating interior temperature, especially that of a motor vehicle, in which the evaluated output quantities of an interior-temperature sensor, of a heating-air and/or cooling-air temperature sensor and of a desired-temperature transmitter are fed to an electrical regulating device which controls at least one actuator for influencing the amount of heat fed to the interior, characterized in that the evaluation of the heating-air and/or cooling-air temperature (TW) is carried out by the regulating device and is dependent on the deviation of the interior temperature (TI) from the desired temperature (TS).

2. Method according to Claim 1, characterized in that the evaluation of the heating-air and/or cooling-air temperature (TW) is essentially proportional to the deviation of the interior temperature (TI) from the desired temperature (TS).

3. Method according to Claim 1, characterized in that the evaluation of the heating-air and/or cooling-air temperature (TW) essentially vanishes when the interior temperature (TI) is equal to the desired temperature (TS).

4. Method according to Claim 1, characterized in that the evaluation of the heating-air and/or cooling-air temperature (TW) has a maximum value (Y) when the deviation of the interior temperature (TI) from the desired temperature (TS) reaches a predetermined value (X).

5. Method according to Claim 1, characterized in that the evaluation of the heating-air and/or cooling-air temperature (TW) is dependent on the difference between desired temperature (TS) and interior temperature (TI).

6. Method according to Claim 5, characterized in that the evaluation is dependent on the amount of the difference.

7. Method according to Claim 5, characterized in that the difference between the desired temperature (TS) and the interior temperature (TI) is weighted with an amplification factor (K).

8. Method according to Claim 7, characterized in that the amplification factor (K) is selected as constant.

9. Method according to Claim 7, characterized in that the amplification factor (K) is selected as dependent on the difference between desired temperature (TS) and interior temperature (TI) and/or a further temperature.

10. Method according to Claim 7, characterized in that the amplification factor (K) is selected as dependent on the outside temperature.

11. Method according to Claim 1, characterized in that the evaluation of the heating-air and/or cooling-air temperature (TW) is dependent on the quotient of desired temperature (TS) and interior temperature (TI) and/or on the quotient of interior temperature (TI) and desired temperature (TS), especially reduced by the value 1.

12. Method according to Claim 11, characterized in that the evaluation is dependent on the amount of the quotients.

13. Method according to Claim 1, characterized in that dynamic changes in the output quantity of the heating-air and/or cooling-air temperature sensor are additionally fed to the regulating device.

14. Method according to Claim 1, characterized in that the overall amplification (VR) of the regulating device (R) is dependent on the outside temperature (TA).

15. Method according to Claim 1, characterized in that a microcomputer is used as an overall electrical regulating device (GR).

16. Method according to Claim 1, characterized in that the interior-temperature sensor in the motor vehicle is arranged essentially in a stationary air mass, especially in the dashboard.

17. Method according to Claim 1, characterized in that the heating-air and/or cooling-air temperature sensor is arranged behind a heating-air and/or cooling-air heat exchanger.

18. Method according to Claim 1, characterized in that the heating-air and/or cooling-air temperature sensor is designed as a mixing-chamber temperature sensor or as a blow-out temperature sensor.

## Revendications

1. Procédé pour réguler la température d'un volume intérieur, notamment d'un véhicule automobile, dans lequel les valeurs de sortie évaluées d'un capteur de température du volume intérieur, d'un capteur de température d'air de chauffage et/ou de refroidissement et d'un émetteur de température de consigne sont fournies à un dispositif de régulation électrique qui commande au moins un organe de réglage pour influencer la quantité de chaleur amenée au volume intérieur, caractérisé par le fait que l'évaluation de la température (TW) de l'air de chauffage et/ou de refroidissement est effectuée par le dispositif de régulation et dépend de l'écart entre la température (TI) du volume intérieur et la température de consigne (TS).

2. Procédé selon revendication 1, caractérisé par le fait que l'évaluation de la température (TW) de l'air de chauffage et/ou de refroidissement est sensiblement proportionnelle à l'écart entre la température (TI) du volume intérieur et la température de consigne (TS).

3. Procédé selon revendication 1, caractérisé par le fait que l'évaluation de la température (TW) de l'air de chauffage et/ou de refroidissement disparaît sensiblement lorsque la température (TI) du volume intérieur est égale à la température de consigne (TS).

4. Procédé selon revendication 1, caractérisé par le fait que l'évaluation de la température (TW) de l'air de chauffage et/ou de refroidissement présente une valeur maximale (Y) lorsque l'écart entre la température (TI) du volume intérieur et la température de consigne (TS) atteint une valeur prédéterminée (X).

5. Procédé selon revendication 1, caractérisé par le fait que l'évaluation de la température (TW) de l'air de chauffage et/ou de refroidissement dépend de la différence entre température de consigne (TS) et température (TI) du volume intérieur.

6. Procédé selon revendication 5, caractérisé par le fait que l'évaluation dépend du montant de la différence.

7. Procédé selon revendication 6, caractérisé par le fait que la différence entre la température de consigne (TS) et la température (TI) du volume intérieur est pondérée par un facteur d'amplification (K).

8. Procédé selon revendication 7, caractérisé par le fait que le facteur d'amplification (K) est choisi constant.

9. Procédé selon revendication 7, caractérisé par le fait que le facteur d'amplification (K) est choisi en fonction de la différence entre température de consigne (TS) et température (TI) du volume intérieur et/ou une autre température.

10. Procédé selon revendication 7, caractérisé par le fait que le facteur d'amplification (K) est choisi en fonction de la température extérieure.

11. Procédé selon revendication 1, caractérisé par le fait que l'évaluation de la température (TW) de l'air de chauffage et/ou de refroidissement dépend du quotient de la température de consigne (TS) et de la température (TI) du volume intérieur et/ou du quotient de la température (TI) du volume intérieur et de la température de consigne (TS), notamment réduit de la valeur 1.

12. Procédé selon revendication 11, caractérisé par le fait que l'évaluation dépend du montant des quotients.

13. Procédé selon revendication 1, caractérisé par le fait que des variations dynamiques des grandeurs de sortie du capteur de température d'air de chauffage et/ou de refroidissement sont en outre transmises au dispositif de régulation.

14. Procédé selon revendication 1, caractérisé par le fait que l'amplification globale (VR) du dispositif de régulation (R) dépend de la température extérieure (TA).

15. Procédé selon revendication 1, caractérisé par le fait qu'un microcalculateur est utilisé en tant que dispositif global de régulation électrique (GR).

16. Procédé selon revendication 1, caractérisé par le fait que le capteur de température de volume intérieur est agencé dans le véhicule automobile sensiblement dans une masse d'air sans mouvement, notamment dans le tableau de bord.

17. Procédé selon revendication 1, caractérisé par le fait que le capteur de température d'air de chauffage et/ou de refroidissement est agencé derrière un échangeur de chaleur d'air de chauffage et/ou de refroidissement.

18. Procédé selon revendication 1, caractérisé par le fait que le capteur de température d'air de chauffage et/ou de refroidissement est réalisé en tant que capteur de température de chambre de mélange ou en tant que capteur de température de soufflage.

## FIG 1

## FIG 2